# EUROPEAN PATENT SPECIFICATION

(11) **EP 2 138 536 B1**
(45) Date of publication and mention of the grant of the patent: **06.06.2012**
(21) Application number: 08722687.4
(22) Date of filing: 24.03.2008
(51) Int. Cl.: B60C 15/06, C08L 7/00, C08L 15/00, C08K 3/04, C08K 3/36, C08K 5/29, C08K 5/54

(54) **Bead Apex and Tire**
Kernreiter und Reifen
Bourrage sur Tringle et Pneu

(30) Priority: 16.05.2007 JP 2007130377
(43) Date of publication of application: 30.12.2009
(73) Proprietor: Sumitomo Rubber Industries, Ltd., Kobe-shi, Hyogo 651-0072 (JP)
(72) Inventor: KIKUCHI, Naohiko, Kobe-shi Hyogo 651-0072 (JP)
(74) Representative: Manitz, Finsterwald & Partner GbR
(86) International application number: PCT/JP2008/055371
(87) International publication number: WO 2008/142906

(56) References cited:
- WO-A1-02/50180
- WO-A1-99/29687
- JP-A- 09 302 146
- JP-A- 2001 520 292
- JP-A- 2002 037 929
- JP-A- 2003 525 333
- JP-A- 2004 524 387
- JP-A- 2004 525 022
- KR-A- 20000 067 051
- DATABASE COMPENDEX [Online] ENGINEERING INFORMATION, INC., NEW YORK, NY, US; 1 December 1975 (1975-12-01), CAIN M E ET AL: "QUINONE DIIMINES: A NOVEL CLASS OF SCORCH FREE ANTIDEGRADANTS." XP002568656 Database accession no. EIX76050001492
- DATTA R ET AL: "N-(1,3-DIMETHYLBUTYL)-N'-PHENYL-P-CHINOND IIMIN (Q-FLEX-QDI) - EINE MULTIFUNKTIONELLE CHEMIKALIE FUER DIE GUMMIINDUSTRIE" GUMMI, FASERN, KUNSTSTOFFE.INTERNATIONALE FACHZEITSCHRIFT FUR DIE POLYMER-VERARBEITUNG, GENTNER VERLAG. STUTTGART, DE, vol. 53, no. 7, 1 July 2000 (2000-07-01), pages 457-463, XP000935390 ISSN: 0176-1625

## Description

### TECHNICAL FIELD

The present invention relates to a bead apex, and a tire, and especially relates to a bead apex made of a rubber composition that is excellent in molding processability and can increase the hardness of the bead apex after vulcanization while reducing the used amount of components derived from petroleum resources.

### BACKGROUND ART

Excellent steering stability has become necessary also in a tire due to the improvement of the performance of an automobile and the development of road networks in recent years. It is necessary to increase the hardness of the bead apex in order to obtain excellent steering stability in a tire, and a rubber composition for the bead apex in which a large amount of carbon black is compounded has been conventionally developed (for example, see Japanese Patent Laying-Open No. 2004-339287 (Patent Document 1)).
Patent Document 1: Japanese Patent Laying-Open No. 2004-339287

### DISCLOSURE OF THE INVENTION

### PROBLEMS TO BE SOLVED BY THE INVENTION

However, the environmental problem has been taken very seriously in recent years, and a regulation of suppressing CO₂ exhaust has been reinforced. Further, because the petroleum resources are limited and the supply amount thereof has decreased every year, a sudden increase in the price of petroleum in the future can be predicted, and there is a limitation in the use of the components derived from the petroleum resources. Furthermore, in the case of confronting the drying up of the petroleum resources, it can be predicted that it will become difficult to manufacture a tire constituted from components derived from such petroleum resources.

Then, there generates a necessity for developing a rubber composition for a bead apex in which silica is added that is a component not derived from petroleum resources (derived from resources other than petroleum resources) in place of carbon black that is a component derived from petroleum resources.

However, because the Mooney viscosity of the rubber composition increases in the case of adding silica in place of carbon black, there is a problem that the molding processability such as extrusion processability decreases.

Furthermore, the rubber composition for a bead apex is require to have high hardness of the bead apex after vulcanization and high molding processability.

JP 2002-037,929 A discloses a rubber composition for a tire tread comprising 100 parts by weight of a rubber component and 1 to 10 parts by weight of cut waste paper. More specifically, a respective rubber composition may contain 80 parts by weight of natural rubber, 20 parts by weight of butadiene rubber and 50 phr of carbon black.

KR 2000-0067051 A (D2) relates to a rubber composition for a tire tread including 100 parts by weight of a rubber component including at least 60 percent by weight of natural rubber, 0.5 to 1.5 parts by weight of 1,3-bis(citraconimidomethyl)benzene, 1.0 to 3.0 parts by weight of N-1,3-dimetyl-buthyl-N'-phenyl quinine diimine, 1 to 3 parts by weight of stearic acid, 3 to 6 parts by weight of zinc oxide, 40 to 65 parts by weigt of carbon black and 0 to 15 parts by weight of silica.

WO 02/50180 A1 relates to a silica filled, sulfur-vulcanizable rubber composition comprising an unsaturated rubber, such as styrene-butadiene-rubber, 20 to 100 phr of silica, 1.6 to 8 phr of a silica coupling agent, 0.05 to 5 phr of an antidegradant, 0.1 to 5 phr of a vulcanization accelerator, 0.1 to 10 phr of sulfur and 0.5 to 5 phr of a quinine diimine compound.

Cain et al. discloses in "Quinone diimines: A novel class of scorch free antidegradants", Compendex EI accession no. EIX76050001492 that disubstituted quinine diimines react with natural and other highly-unsaturated rubbers to produce free p-phenylenediamine together with rubber-bound products which are capable of antioxidant activity after solvent-extraction of the vulcanizates and that it can also act as a scorch inhibitor.

EP 1 176 167 A2 discloses a rubber composition, which contains 0.5 to 12 parts by weight of a paper relative to 100 parts by weight of a rubber component.

In view of the above-described situation, an object of the present invention is to provide a rubber composition for a bead apex that is excellent in molding processability and can increase the hardness of the bead apex after vulcanization while reducing the used amount of components derived from petroleum resources, the bead apex, and a tire.

### MEANS FOR SOLVING THE PROBLEMS

The present invention provides bead apex comprising a rubber composition to form a bead apex provided between a non-folded back part and a folded back part of an annular ply folded back so as to surround a bead wire at both ends or the ply, wherein the rubber composition includes a rubber component containing at least one of a natural rubber and an epoxidized natural rubber, and includes not less than 30 parts by mass of silica and not less than 0.1 part by mass and not more than 10 parts by mass of a quinone diimine compound relative to 100 parts by mass of the rubber component.

Here, the content of carbon black relative to 100 parts by mass of the rubber component is preferably not more than 25 parts by mass in the rubber composition of the bead apex according to the present invention.

Further, in the rubber composition of the bead apex according to the present invention, the rubber component includes a mixture of a natural rubber and an epoxidized natural rubber, and the content of the natural rubber is preferably not less than 50% by mass of the rubber component.

Further, the rubber composition of the bead apex according to the present invention preferably includes a silane coupling agent.

Further, in the rubber composition of the bead apex according to the present invention, the JIS-A hardness after vulcanization is preferably not less than 75.

Furthermore, the present invention provides a tire manufactured using the above-described bead apex.

### EFFECTS OF THE INVENTION

According to the present invention, a bead apex made of a rubber composition for a bead apex that is excellent in molding processability and can increase the hardness of the bead apex after vulcanization while reducing the used amount of components derived from petroleum resources, and a tire can be provided.

### BRIEF DESCRIPTION OF THE DRAWINGS

Fig. 1 is a schematic cross-sectional drawing to illustrate a part of a manufacturing step of one example of a method for manufacturing a tire by using a bead apex including a rubber composition according to the present invention.
Fig. 2 is a schematic cross-sectional drawing to illustrate another part of a manufacturing step of one example of a method for manufacturing a tire by using the bead apex including the rubber composition according to the present invention.
Fig. 3 is a schematic cross-sectional drawing of an upper part of one example of a tire produced using the bead apex including the rubber composition according to the present invention.
Fig. 4 is a schematic enlarged cross-sectional drawing of the vicinity of the bead apex of the tire shown in Fig. 3.

### DESCRIPTION OF THE REFERENCE SIGNS

1 joint-less band, 4 ply, 4a folded back part, 4b non-folded back part, 5 bead wire, 6 belt, 6a second belt layer, 6b first belt layer, 7 bead apex, 8 tread, 9 side wall, 10 inner liner

### BEST MODES FOR CARRYING OUT THE INVENTION

The embodiments of the present invention are described below. Moreover, the same reference numerals represent the same part or the corresponding parts in the drawings of the present invention.

As a result of devoted investigation by the present inventor, it was found that excellent bead apex characteristics can be obtained in the case of producing a bead apex by using a rubber composition including at least one of a natural rubber and an epoxidized natural rubber and including not less than 30 parts by mass of silica and not less than 0.1 part by mass and not more than 10 parts by mass of a quinone diimine compound relative to 100 parts by mass of the rubber component because it is excellent in molding processability and can increase the hardness of the bead apex after vulcanization while reducing the used amount of components derived from petroleum resources, and led to completion of the present invention.

Here, one of the natural rubber and the epoxidized natural rubber, a mixed rubber in which the natural rubber and the epoxidized natural rubber are mixed, or the like is used for the rubber component of the present invention.

The used amount of the components derived from petroleum resources can be reduced by using a rubber component including at least one of the natural rubber and the epoxidized natural rubber for the rubber component as described above.

Here, a conventionally known natural rubber can be used, and a general natural rubber in the tire industry, such as RSS and TSR, can be used for the natural rubber.

A conventionally known epoxidized natural rubber can be used, and commercially available epoxidized natural rubbers, ones of which the natural rubber is epoxidized, or the like can be used for the epoxidized natural rubber.

Here, examples of the commercially available epoxidized natural rubbers that can be used include ENR 25 whose epoxidation ratio is 25% and ENR 50 whose epoxidation ratio is 50% sold by Kumplan Guthrie Berhad.

Further, examples of a method for epoxidizing a natural rubber, that can be used, include a chlorohydrine method, a direct oxidation method, an alkylhydroperoxide method, and a peracid method. Here, an example of the peracid method that can be used includes a method of reacting organic peracid such as peracetic acid and performic acid with a natural rubber.

Here, the epoxidation ratio of the epoxidized natural rubber is preferably not less than 5 mol%, and more preferably not less than 10 mol%. In the case that the epoxidation ratio is not less than 5 mol%, especially not less than 10 mol%, physical properties thereof tend to be largely different from those of the natural rubber.

Further, the epoxidation ratio of the epoxidized natural rubber is preferably not more than 80 mol%, and more preferably not more than 60 mol%. Because generation of reversion during vulcanization is suppressed in the case that the epoxidation ratio is not more than 80 mol%, especially not more than 60 mol%, uniformity of the rubber composition after kneading can be made good, handling of the rubber composition becomes easy, and therefore, the molding procesability of the rubber composition and performance of the tire tend to be improved.

Here, the epoxidation ratio means the ratio (mol%) of the number of double bonds in the rubber after being epoxidized to the total number of double bonds in the rubber before being epoxidized.

Further, in the case of using a mixed rubber in which natural rubber and epoxidized natural rubber are mixed for the rubber component, the content of the natural rubber is preferably not less than 50% by mass, and more preferably not less than 60% by mass relative to the rubber component including the natural rubber and the epoxidized natural rubber. In the case that the content of the natural rubber is not less than 50% by mass, especially not less than 60% by mass relative to the rubber component, rolling resistance of the tire containing a bead apex produced using the rubber composition according to the present invention tends to decrease.

Further, at least one type of rubbers such as a butadiene rubber (BR), a styrenebutadiene rubber (SBR), an isoprene rubber (IR), and a butyl rubber (IIR) may be contained as long as at least one of the natural rubber and the epoxidized natural rubber is contained in the rubber component according to the present invention.

Further, not less than 30 parts by mass of silica relative to 100 parts by mass of the above-described rubber component is contained in the rubber composition according to the present invention. Because the used amount of carbon black as a filler can be reduced with such a configuration, the used amount of components derived from petroleum resources can be reduced, and sufficient reinforcing effect due to silica can be obtained. Moreover, a conventionally known silica can be used, and anhydrous silica and/or water-containing silica can be used for the silica.

Here, from a viewpoint of further obtaining sufficient reinforcing effect due to the silica, the content of the silica is preferably not less than 50 parts by mass, and more preferably not less than 55 parts by mass relative to 100 parts by mass of the above-described rubber component.

Further, from a viewpoint of suppressing the decrease of the molding processability of the rubber composition, the content of the silica is preferably not more than 100 parts by mass, and more preferably not more than 95 parts by mass relative to 100 parts by mass of the above-described rubber component.

Here, the nitrogen adsorption specific surface area (N₂SA) of the silica is preferably not less than 100 m²/g, and more preferably not less than 110 m²/g. In the case that the nitrogen adsorption specific surface area (N₂SA) of the silica is not less than 100 m²/g, especially not less than 110 m²/g, a sufficient reinforcing effect by the silica tends to be obtained.

Further, the nitrogen adsorption specific surface area (N₂SA) of the silica is preferably not more than 300 m²/g, and more preferably not more than 280 m²/g. In the case that the nitrogen adsorption specific surface area (N₂SA) of the silica is not more than 300 m²/g, especially not more than 280 m²/g, dispersibility and low heat build-up property of the silica tend to be improved:

Further, a silane coupling agent is preferably contained in the rubber composition according to the present invention. Here, conventionally known silane coupling agents can be used for the silane coupling agent, and examples thereof include a sulfide-based agent such as bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoletetrasulfide, 3-triethoxysilylpropylmethacrylatemonosulfide, and 3-trimethoxysilylpropylmethacrylatemonosulfide; a mercapto-based agent such as 3-mercaptopropyltrimethoxysilane, 3-mercaptopropyltriethoxysilane, 2-mercaptoethyltrimethoxysilane, and 2-mercaptoethyltriethoxysilane; a vinyl-based agent such as vinyltriethoxysilane and vinyltrimethoxysilane; an amino-based agent such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysiane; a glycidoxy-based agent such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; a nitro-based agent such as 3-nitropropyltrimethoxysilane and 3-nitropropyltriethoxysilane; and a chloro-based such as 3-chloropropylmethoxysilane, 3-chloropropyltriethoxysilane, 2-chloroethyltrimethoxysilane, and 2-chloroethyltriethoxysilane. Moreover, the above-described silane coupling agent may be used alone, and two or more thereof may be used in combination.

The content of the silane coupling agent is preferably not less than 4 parts by mass, and more preferably not less than 8 parts by mass relative to 100 parts by mass of the silica. In the case that the content of the silane coupling agent is not less than 4 parts by mass, especially not less than 8 parts by mass relative to 100 parts by mass of the silica, an increase of the Mooney viscosity can be suppressed, and the wear resistance tends to be able to be improved.

Moreover, the rubber composition according to the present invention may contain a conventionally known carbon black derived from petroleum resources. However, from the viewpoint of reducing the used amount of components derived from petroleum resources, the content of the carbon black is preferably not more than 25 parts by mass , and more preferably not more than 5 parts by mass relative to 100 parts by mass of the above-described rubber component.

Further, a conventionally known carbon black such as SAF, ISAF, HAF, and FEF can be used for the carbon black.

Here, the nitrogen adsorption specific surface area (N₂SA) of the carbon black is preferably not less than 30 m²/g, and more preferably not less than 50 m²/g. In the case that the nitrogen adsorption specific surface area (N₂SA) of carbon black is not less than 30 m²/g, especially not less than 50 m²/g, sufficient reinforcing effect due to the carbon black tends to be obtained.

Further, the nitrogen adsorption specific surface area (N₂SA) of the carbon black is preferably not more than 300 m²/g, and more preferably not more than 250 m²/g. In the case that the nitrogen adsorption specific surface area (N₂SA) of the carbon black is not more than 300 m²/g, especially not more than 250 m²/g, the molding processability of the rubber component tends to be improved.

Further, not less than 0.1 part by mass and not more than 10 parts by mass of a quinone diimine compound relative to 100 parts by mass of the above-described rubber component is contained in the rubber composition according to the present invention. Here, the quinone diimine compound functions as an antioxidant, and has a function of lowering the Mooney viscosity of the rubber composition after kneading.

Here, examples of the quinone diimine compound that can be used include benzenamine, N-{4-[(1,3-dimethylbutyl)imino]-2,5-cyclohexadien-1-ylidine}-. (represented by the following formula (1))

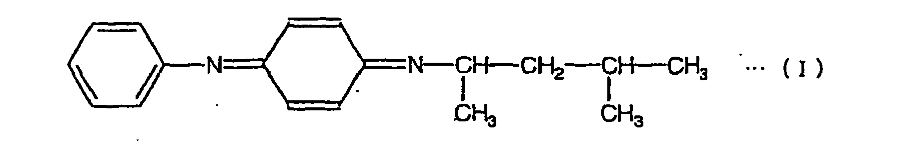

Further, the content of the quinone diimine compound is preferably not less than 1 part by mass, and more preferably not less than 2 parts by mass relative to 100 parts by mass of the above-described rubber component. In the case the content of the quinone diimine compound is not less than 1 part by mass, especially not less than 2 parts by mass relative to 100 parts by mass of the rubber component, the Mooney viscosity of the rubber composition tends to be able to be lowered further.

Further, the content of the quinone diimine compound is more preferably not more than 8 parts by mass relative to 100 parts by mass of the above-described rubber component. In the case the content of the quinone diimine compound is not more than 8. parts by mass relative to 100 parts by mass of the rubber component, the quinone diimine compound is bloomed on the surface of the rubber composition after vulcanization, and the tendency that the rubber composition after vulcanization is contaminated becomes small.

Further, various components such as waxes, various antioxidants, stearic acid, zinc oxide, and sulfur generally used in tire industry may be appropriately compounded in the rubber composition according to the present invention other than the above-described components.

Further, the JIS-A hardness of the rubber composition of the bead apex according to the present invention after vulcanization is preferably not less than 75, and more preferably not less than 80. Because the hardness of the rubber after vulcanization becomes high in this case, the rubber tends to become an appropriate rubber composition for manufacturing of the bead apex. Moreover, the JIS-A hardness is measured using a type A durometer according to "Vulcanized Rubber and Thermoplastic Rubber - How to Obtain Hardness" of JIS K6253.

Generally, the bead apex improves the rigidity of the bead wire and the steering stability of a tire by being provided between a non-folded back part and a folded back part of an annular ply folded back so as to surround a bead wire at both ends of the annular ply. Therefore, the bead apex is desired to have high hardness in order to improve the rigidity of the bead wire. Moreover, the bead apex may be provided in a way that a part of it is sticking out from the region between the non-folded back part and the folded back part of the folded back ply.

Further, the bead apex is provided between the non-folded back part and the folded back part of a folded back ply in the state of a non-vulcanized rubber composition molded in a prescribed shape. However, manufacturing efficiency of the tire decreases in the case that the molding processability is poor. Therefore, one excellent in molding processability is desirably used for a non-vulcanized rubber composition for forming the bead apex.

Then, the bead apex is preferably produced using the rubber composition according to the present invention that is excellent in the molding processability in the state of non-vulcanization and can increase hardness of the rubber in the state after vulcanization. Further, in the case of forming the bead apex by using the rubber composition according to the present invention, the used amount of components derived from petroleum resources can be reduced compared with the conventional bead apex formed using components derived from petroleum resources, such as synthetic rubbers and carbon black.

The rubber composition of the bead apex according to the present invention can be manufactured by mixing a rubber component containing at least one of the above-described natural rubbers and the epoxidized natural rubbers, the silica, and the quinone diimine compounds. Here, needless to say, they may be mixed by appropriately adding conventionally known additives, if necessary.

Further, a conventionally known mixing method can be used for the mixing method used in the manufacturing of the rubber composition according to the present invention, and examples thereof include a kneading method using a conventionally known open roll, a Banbury mixer, a pressure-type kneader, and a continuous kneader, etc. Then, the bead apex can be obtained by kneading and then extruding the rubber composition according to the present invention into a necessary shape with an extruder.

One example of a method for manufacturing a tire by using the bead apex including the rubber composition according to the present invention is described below.

First, a ply having a constitution in which a cord including polyester and the like is buried in a rubber sheet is wound in a ring shape on the outer peripheral surface of a conventionally known drum roll.

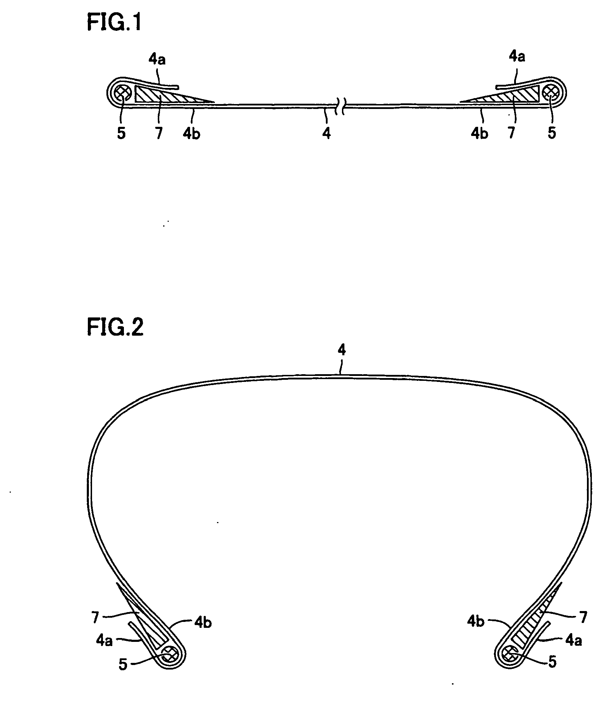

Next, as shown in the schematic cross-sectional drawing of Fig. 1, a bead wire 5 of which a plurality of wires are bundled and made into a ring shape is put into the outer peripheral surface of both ends of an annular ply 4, a bead apex 7 including the rubber composition according to the present invention is provided, both ends of ply 4 are folded back inside, and bead wire 5 and bead apex 7 are wrapped in between a folded back part 4a and a non-folded back part 4b of ply 4.

Continuing, as shown in the schematic cross-sectional drawing of Fig. 2, ply 4 in which bead wire 5 and bead apex 7 are wrapped in the end part is inflated into a toroid shape.

After that, a green tire is produced with a conventional known method, the non-vulcanized rubber composition constituting each part of a tread, a side wall, a belt, a joint-less band, an inner liner, a ply, a bead apex, of the green tire is vulcanized by vulcanizing after providing the produced green tire in a mold for a tire molding, and the tire is manufactured.

Moreover, steps of providing a tread, a side wall, a belt, a joint-less band, an inner liner, are not described above.

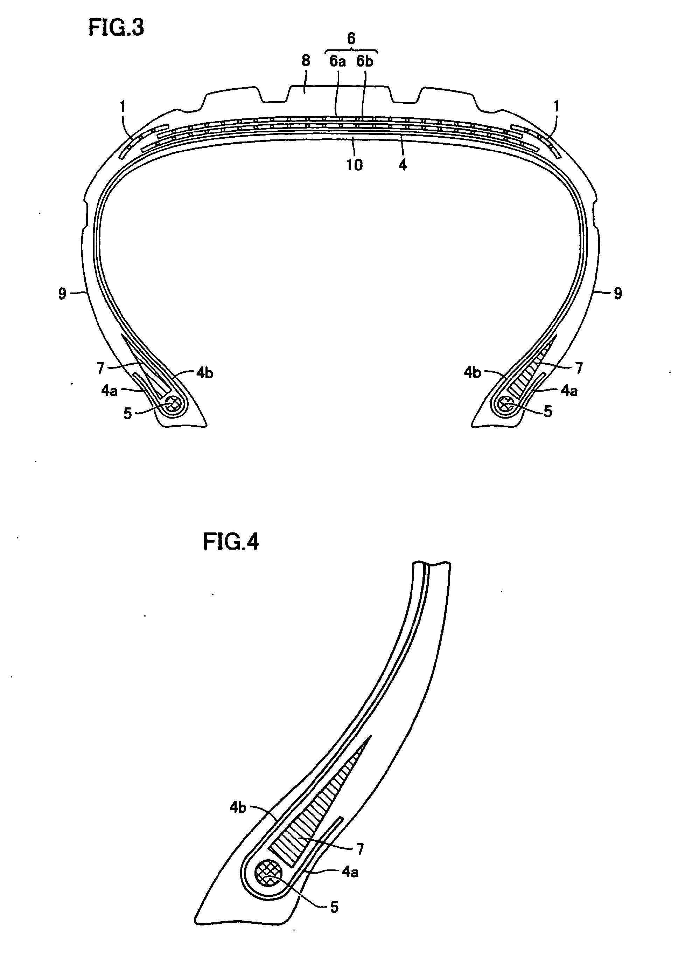

A schematic cross-sectional drawing of an upper part of one example of the tire produced as described above is shown in Fig. 3. Further, a schematic enlarged cross-sectional drawing of the vicinity of the bead apex of the tire shown in Fig. 3 is shown in Fig. 4.

Here, as shown in Fig. 3, a side wall 9 is formed on the side face of ply 4 wrapping bead wire 5 and bead apex 7 at both ends in the tire manufactured as described above. Further, a belt in which a first belt layer 6b and a second belt layer 6a are stacked in this order is provided in the center of the outer peripheral surface of ply 4, a joint-less band 1 is provided so as to cover the end of belt 6, and a tread 8 that serves as a grounding part of the tire is formed on the outer peripheral surface of belt 6 and joint-less band 1. Further, an inner liner 10 is provided on the inner peripheral surface of ply 4 to prevent gas such air inside ply 4 from leaking outside.

Further, in Fig. 4, a part of apex 7 is provided between folded back part 4a and non-folded back part 4b of ply 4, and apex 7 has a shape in which the thickness is decreasing toward the outer direction of diameter of the tire.

Because a tire having the above configuration is produced using the bead apex produced using the rubber composition according to the present invention, excellent molding processability of the rubber composition before vulcanization can be obtained, and the hardness of the bead apex after vulcanization can be increased, and therefore, the steering stability of the tire during running of a vehicle can be stably improved.

Furthermore, because the above described tire can suppress the used amount of the components derived from the petroleum resources, it can be made as an "eco-tire" that has concern for the environment and can prepare for a decrease of the supply of petroleum in the future.

Moreover, from the viewpoint of suppressing the used amount of components derived from petroleum resources, parts of the tire other than the bead apex are preferably produced also using components other than components derived from petroleum resources.

### EXAMPLES

### <Examples 1 to 3 and Comparative Examples 1 to 3>

Following to the compounds shown in Table 1, a natural rubber, an epoxidized natural rubber, silica, a silane coupling agent, and a quinone diimine compound were kneaded at 130°C for 2 minutes with 1.7L of Banbury mixer manufactured by Kobe Steel., Ltd., and a master batch was obtained.

Then, after the master batch obtained as described above was exhausted once, components other than sulfur and a Vulcanization accelerator were added in the master batch obtained as described above, kneaded at 130°C for 2 minutes with 1.7L of Banbury mixer manufactured by Kobe Steel, Ltd., and a kneaded product was obtained.

After that, the kneaded product obtained as described above, sulfur, and a vulcanization accelerator were kneaded at 95°C for 2 minutes with an open roll, each of the non-vulcanized rubber compositions of Example s 1 to 3 and Comparative Examples 1 to 3 were obtained. Moreover, the values shown in the other components column of Table 1 represent the compounded amount of each component shown in parts by mass with the rubber component being 100 parts by mass.

**Table 1**

| | | EXAMPLE 1 | EXAMPLE 2 | EXAMPLE 3 | COMPARATIVE EXAMPLE 1 | COMPARATIVE XAMPLE 2 | COMPARATIVE EXAMPLE 3 |
|---|---|---|---|---|---|---|---|
| | NATURAL RUBBER (NOTE 1) | 100 | 100 | 80 | 70 | 100 | 100 |
| RUBBER COMPONENT | EPOXIDIZED NATURAL RUBBER^{(NOTE 2)} | 0 | 0 | 20 | 0 | 0 | 0 |
| | STYRENE-BUTADIENE COPOLYMER RUBBER ^{(NOTE 3)} | 0 | 0 | 0 | 30 | 0 | 0 |
| | QUINONE DIIMINE COMPOUND ^{(NOTE 4)} | 4 | 4 | 4 | 0 | 0 | 0 |
| | CARBON BLACK ^{(NOTE 5)} | 0 | 20 | 0 | 70 | 0 | 0 |
| | SILICA ^{(NOTE 6)} | 90 | 70 | 90 | 0 | 90 | 70 |
| | SILANE COUPLING AGENT (NOTE 7) | 9 | 7 | 9 | 0 | 9 | 7 |
| | ANTIOXIDANT ^{(NOTE 8)} | 1.5 | 1.5 | 1.5 | 1.5 | 1.5 | 1.5 |
| OTHER COMPONENTS | STEARIC ACID^{(NOTE 9)} | 2 | 2 | 2 | 2 | 2 | 2 |
| | ZINC OXIDE^{(NOTE 10)} | 3 | 3 | 3 | 3 | 3 | 3 |
| | SULFUR ^{(NOTE 11)} | 5 | 5 | 5 | 5 | 5 | 5 |
| | VULCANIZATION ACCELERATOR NS ^{(NOTE 12)} | 4 | 4 | 4 | 4 | 4 | 4 |
| | VULCANIZATION ACCELERATOR CBS ^{(NOTE 13)} | 4 | 4 | 4 | 4 | 4 | 4 |
| | MOONEY VISCOSITY | 85 | 90 | 80 | 100 | 50 | 75 |
| | SHEET PROCESSABILITY | A | A | A | A | B | A |
| EVALUATION | HARDNESS (JIS-A) | 86 | 88 | 87 | 85 | 88 | 72 |
| | RUBBER STRENGTH INDEX | 120 | 130 | 125 | 100 | 140 | 110 |

| | | | | | | | |
|---|---|---|---|---|---|---|---|
| (Note 1) Natural rubber (NR): TSR (Note 2) Epoxidized natural rubber (ENR): ENR 25 (epoxidation ratio: 25%) manufactured by Kumplan Guthrie Berhad (Note 3) Styrene-butadiene copolymer rubber (SBR): SBRI 502 manufactured by JSR Corporation (Note 4) Quinone diimine compound: Q-FLEX QDI (Benzenamine, N-{4-[(1,3-dimethylbutyl) imino]-2,5-cyclohexadien-1-ylidine}-) manufactured by FLEXSYS (Note 5) Carbon black: SHOBLACK N330 (N₂SA: 75 m²/g) manufactured by Cabot Japan K. K. (Note 6) Silica: ULTRASIL VN3 (N₂SA: 175 m²/g) manufactured by Degussa Ltd. (Note 7) Silane coupling agent: Si-69 manufactured by Degussa Ltd. (Note 8) Antioxidant: NOCRAC 6C (N-(1,3-dimethylbutyl)-N'-phenyl-p-pheylenediamine) manufactured by Ouchi Shinko Chemical Industrial Co., Ltd. (Note 9) Stearic acid manufactured by NOF Corporation (Note 10) Zinc oxide: Zinc Flower No. 1 manufactured Mitsui Mining & Smelting Co., Ltd. (Note 11) Sulfur: MU-CRON OT manufactured by Shikoku Chemicals Corporation (Note 12) Vulcanization accelerator NS: NOCCELER-NS (N-tert-butyl-2-benzothiazolyl-sulfeneamide) manufactured by Ouchi Shinko Chemical Industrial Co., Ltd. (Note 13) Vulcanization accelerator CBS: NOCCELER-CZ (N-cyclohexyl-2-benzothiazolyl-sulfeneamide) manufactured by Ouchi Shinko Chemical Industrial Co., Ltd. | | | | | | | |

### <Mooney Viscosity>

The Mooney viscosity was measured on each of the non-vulcanized rubber compositions of Examples 1 to 3 and Comparative Examples 1 to 3 under a condition of 130°C according to JIS K6300-1 "Non-vulcanized Rubber - Physical Properties - First Part: How to Obtain Viscosity and Scorch Time with Mooney Viscometer." The results are shown in Table 1. The Mooney viscosity in Table 1 is represented by a relative value with the Mooney viscosity of the non-vulcanized rubber composition of Comparative Example 1 being 100.

Moreover, the larger the value of the Mooney viscosity in Table 1, the lower the Mooney viscosity is, and it shows the excellent molding processability. Here, the non-vulcanized rubber composition having a Mooney viscosity value of 80 or more in Table 1 was excellent in molding processability.

### <Sheet Molding Property>

A non-vulcanized rubber sheet including each of the non-vulcanized rubber compositions of Examples 1 to 3 and Comparative Examples 1 to 3 was obtained by sheeting each of the non-vulcanized rubber compositions of Examples 1 to 3 and Comparative Examples 1 to 3 using a roll.

The surface of these vulcanized sheets was confirmed visually, and a shape of the non-vulcanized rubber sheet was confirmed. The results are shown in Table 1.

Moreover, in Table 1, sheets in which problems such as cut selvage was not confirmed and that had good sheet processability are represented by A, and sheets in which problems such as cut selvage was confirmed and that did not have good sheet processability are represented by B.

### <Hardness>

Each of the non-vulcanized rubber compositions of Examples 1 to 3 and Comparative Examples 1 to 3 was vulcanized by vulcanizing the non-vulcanized rubber sheet including each of the non-vulcanized rubber compositions of Examples 1 to 3 and Comparative Examples 1 to 3 obtained as described above at 150°C for 30 minutes, and each of vulcanized rubber sheets of Examples 1 to 3 and Comparative Examples 1 to 3 was obtained.

Then, hardness (JIS-A hardness) of each of the above-described vulcanized rubber sheets was measured using a type A durometer according to "Vulcanized Rubber and Thermoplastic Rubber - How to Obtain Hardness" of JIS K6253. The results are shown in Table 1. Moreover, JIS-A hardness is preferably 80 or more in order to be used for a bead apex.

### <Tensile Test>

A tensile test was performed on each of the above-described vulcanized rubber sheets of Examples 1 to 3 and Comparative Examples 1 to 3 by using a test piece of a dumbbell-shaped No. 3 form according to "Vulcanized Rubber and Thermoplastic Rubber - How to Obtain Tensile Characteristics" of JIS K6251, tensile strength (TS) and elongation at breakage (Eb) were obtained, and breaking energy (TS x Eb/2) was calculated as a rubber strength index. The results are shown in Table 1.

Moreover, the rubber strength index represents a value calculated by the following formula (1) with a breaking energy of Comparative Example 1 being 100 in Table 1.

Rubber Strength Index = 100 × (Each of the Breaking Energies of Examples 1 to 3 and Comparative Examples 1 to 3)/(Breaking Energy of Comparative Example 1) (1)

### <Evaluation>

As is obvious from the result shown in Table 1, the rubber compositions of Examples 1 to 3 including a rubber component containing at least one of a natural rubber and an epoxidized natural rubber and including not less than 30 parts by mass of silica and not less than 0.1 part by mass and not more than 10 parts by mass of a quinone diimine compound relative to 100 parts by mass of the rubber component not only have the same level of sheet processability and hardness as the rubber composition of Comparative Example 1 that are the conventional rubber compositions for a bead apex in which only carbon black is used and silica is not used, but also have a result of being excellent in the rubber strength index than the rubber composition of Comparative Example 1.

Further, as shown in Table 1, when the rubber composition of Example 1 and the rubber composition of Comparative Example 2 are compared, the rubber composition of Example 1 containing 4 parts by mass of the quinone diimine compound relative to 100 parts by mass of the rubber component has a result of having a lower Mooney viscosity and being excellent in sheet processability compared with the rubber composition of Comparative Example 2 not containing the quinone diimine compound.

Further, as shown in Table 1, the rubber compositions of Examples 1 to 3 having the above-described configuration have a result of having a lower Mooney viscosity, being excellent in sheet processability, and being excellent in hardness of the rubber and the rubber strength index after vulcanization compared with the rubber composition of Comparative Example 3 not containing the quinone diimine compound.

Therefore, because the rubber compositions of Examples 1 to 3 have the same level or more of sheet processability and hardness as the conventional rubber compositions for a bead apex while reducing the used amount of the components derived from petroleum resources, it is considered that the rubber compositions of Examples 1 to 3 can be preferably used in the formation of the bead apex of a tire.

Although the present invention has been described and illustrated in detail, it is clearly understood that the same is by way of illustration and example only and is not to be taken by way of limitation, the scope of the present invention being interpreted by the terms of the appended claims.

### INDUSTRIAL APPLICABILITY

According to the present invention, a beach apex made of a rubber composition for a bead apex that is excellent in molding processability and can increase the hardness of the bead apex after vulcanization while reducing the used amount of components derived from petroleum resources, and a tire can be provided.

## Claims

1. A bead apex (7) comprising a rubber composition to form a bead apex (7) provided between a non-folded back part and a folded back part of an annular ply (4) folded back so as to surround a bead wire (5) at both ends of said annular ply (4), wherein the rubber composition comprises a rubber component containing at least one of a natural rubber and an epoxidized natural rubber, and comprises not less than 30 parts by mass of silica and not less than 0.1 part by mass and not more than 10 parts by mass of a quinone diimine compound relative to 100 parts by mass of said rubber component.

2. The bead apex (7) according to claim 1, wherein the content of carbon black in the rubber composition relative to 100 parts by mass of the rubber component is not more than 25 parts by mass.

3. The bead apex (7) according to claim 1, wherein the rubber component of the rubber composition comprises a mixture of a natural rubber and an epoxidized natural rubber, and the content of the natural rubber is not less than 50% by mass of said rubber component.

4. The bead apex (7) according to claim 1, wherein the rubber composition comprises a silane coupling agent.

5. The bead apex (7) according to claim 1, wherein the JIS-A hardness after vulcanization is not less than 75.

6. A tire manufactured comprising the bead apex (7) according to claim 1.

## Patentansprüche

1. Wulstkernreiter (7) enthaltend eine Kautschukzusammensetzung, um den Wulstkernreiter (7) auszubilden, welcher zwischen einem nicht rückgefalteten Teilstück und einem so rückgefalteten Teilstück einer ringförmigen Lage (4), so dass diese an beiden Enden der ringförmigen Lage (4) einen Wulstdraht (5) umgibt, wobei die Kautschukzusammensetzung eine Kautschukkomponente enthält, welche wenigstens einen von einem Naturkautschuk und einem epoxidierten Naturkautschuk enthält, und nicht weniger als 30 Massenteile Silica und nicht weniger als 0,1 Massenteile und nicht mehr als 10 Massenteile einer Chinondiiminverbindung bezogen auf 100 Massenteile der Kautschukkomponente enthält.

2. Wulstkernreiter (7) nach Anspruch 1, wobei die Menge des Rußes in der Kautschukkomponente bezogen auf 100 Massenteile der Kautschukkomponente nicht mehr als 25 Massenteile beträgt.

3. Wulstkernreiter (7) nach Anspruch 1, wobei die Kautschukkomponente der Kautschukzusammensetzung eine Mischung aus einem Naturkautschuk und einem epoxidierten Naturkautschuk enthält und die Menge des Naturkautschuks nicht weniger als 50 Massen-% der Kautschukkomponente beträgt.

4. Wulstkernreiter (7) nach Anspruch 1, wobei die Kautschukzusammensetzung ein Silankupplungsmittel enthält.

5. Wulstkernreiter (7) nach Anspruch 1, wobei die JIS-A-Härte nach der Vulkanisation nicht weniger als 75 beträgt.

6. Reifen hergestellt umfassend einen Wulstkernreiter (7) nach Anspruch 1.

## Revendications

1. Bourrage sur tringle (7) comprenant une composition de caoutchouc pour former un bourrage sur tringle (7) fourni entre une partie non rabattue et une partie rabattue d'une nappe annulaire (4) rabattue afin d'entourer un bourrage sur tringle (5) aux deux extrémités de ladite nappe annulaire (4), dans lequel la composition de caoutchouc comprend un constituant de caoutchouc contenant au moins un parmi un caoutchouc naturel et un caoutchouc naturel époxydé, et comprend au moins 30 parties en masse de silice et au moins 0,1 partie en masse et au plus 10 parties en masse d'un composé de quinone diimine par rapport à 100 parties en masse dudit constituant de caoutchouc.

2. Bourrage sur tringle (7) selon la revendication 1, dans lequel la teneur en noir de carbone dans la composition de caoutchouc par rapport à 100 parties en masse du constituant de caoutchouc est d'au plus 25 parties en masse.

3. Bourrage sur tringle (7) selon la revendication 1, dans lequel le constituant de caoutchouc de la composition de caoutchouc comprend un mélange d'un caoutchouc naturel et d'un caoutchouc naturel époxydé, et la teneur du caoutchouc naturel est d'au moins 50 % en masse dudit constituant de caoutchouc.

4. Bourrage sur tringle (7) selon la revendication 1, dans lequel la composition de caoutchouc comprend un agent de couplage de silane.

5. Bourrage sur tringle (7) selon la revendication 1, dans lequel la dureté JIS-A après la vulcanisation est d'au moins 75.

6. Pneu fabriqué comprenant le bourrage sur tringle (7) selon la revendication 1.
